# EUROPÄISCHE PATENTANMELDUNG

(11) **EP 1 136 225 A2**
(43) Veröffentlichungstag der Anmeldung: **26.09.2001**
(21) Anmeldenummer: 01106749.3
(22) Anmeldetag: 17.03.2001
(51) Int. Cl.: B29C 45/44, B22D 17/22, B23P 15/24

(54) **Spritzgiesswerkzeug und Verfahren zum Herstellen eines inneren Formteils desselben**

(30) Priorität: 24.03.2000 DE 10014611
(71) Anmelder: Batra, Ramesh Chandra, 71642 Ludwigsburg (DE)
(72) Erfinder: Batra, Ramesh Chandra, 71642 Ludwigsburg (DE)
(74) Vertreter: Grosse, Rainer, Dipl.-Ing.

(57) **Zusammenfassung**

Das Spritzgießwerkzeug (10) dient insbesondere zur Herstellung eines eine Innenhinterschneidung (24) aufweisenden Kunststoff- oder Leichtmetallwerkstücks (11) und ist mit einem äußeren Formteil (12) und mit einem von diesem getrennten inneren Formteil (13) versehen. Das innere Formteil (13) ist in Bezug auf das äußere Formteil (12) bewegbar zum Auswerfen des spritzgegossenen Werkstücks (11). Hierbei ist vorgesehen, dass das innere Formteil (13) eine Mehrzahl an Formsegmenten (14) enthält, die zwischen einer Gießstellung, in welcher sie einen umfangsförmig geschlossenen Ring bilden, und einer Auswerfstellung, in welcher sie radial nach innen versetzt angeordnet sind, unter Ausnutzung ihrer Eigenfederung bewegbar sind.

## Beschreibung

Die Erfindung bezieht sich auf ein Spritzgießwerkzeug, insbesondere zur Herstellung eines eine Innenhinterschneidung aufweisenden Kunststoff- oder Leichtmetallwerkstücks, mit einem äußeren Formteil und einem von diesem getrennten inneren Formteil, wobei das innere Formteil in Bezug auf das äußere Formteil bewegbar ist zum Auswerfen des spritzgegossenen Werkstücks, gemäß Oberbegriff des Anspruchs 1.

Ferner bezieht sich die Erfindung auf ein Verfahren zum Herstellen eines inneren Formteils eines Spritzgießwerkzeugs, gemäß Oberbegriff des Anspruchs 10.

Spritzgießwerkzeuge zur Herstellung eines eine Innenhinterschneidung aufweisenden Werkstücks, insbesondere eines Kunststoffwerkstücks, sind bekannt. Dabei kann die Innenhinterschneidung des Werkstücks (Spritzgussteil) beispielsweise als Gewinde, Nut und/oder als Keilzunge ausgebildet sein. Das Auswerfen von bereits spritzgegossenen Werkstücken mit einer Innenhinterschneidung aus dem Spritzgießwerkzeug ist problematisch, da aufgrund der mittels der Innenhinterschneidung gebildeten geometrischen Verbindung zwischen der Innenoberfläche des spritzgegossenen Werkstücks und einer äußeren Wirkfläche eines inneren Formteils des Spritzgießwerkzeugs eine axiale Bewegung des beispielsweise als Kappe ausgebildeten Werkstücks nicht möglich ist. Aufgrund einer derartigen geometrischen Verbindung zwischen innerem Formteil und spritzgegossenem Werkstück besteht insbesondere beim Auswerfen des Werkstücks die Gefahr einer ungewollten, gewaltsamen plastischen Verformung beziehungsweise eines unerwünschten Materialbruchs, so dass sich die Ausschussrate von mittels eines derartigen Spritzgießwerkzeugs hergestellten Werkstücken nachteilhafterweise auf einen nicht akzeptablen Wert erhöhen kann.

Es ist daher Aufgabe der Erfindung, ein Spritzgießwerkzeug und ein Verfahren der eingangs genannten Art zu schaffen, mittels welchen unter verhältnismäßig geringem Aufwand ein zuverlässiges und schnelles Auswerfen eines spritzgegossenen Werkstücks möglich ist, wobei gleichzeitig das Spritzgießwerkzeug und insbesondere das innere Formteil fertigungs- und montagegünstig konzipiert sein soll.

Zur Lösung der Aufgabe wird ein Spritzgießwerkzeug mit den Merkmalen des Anspruchs 1 vorgeschlagen, das sich dadurch auszeichnet, dass das innere Formteil eine Mehrzahl an Formsegmenten enthält, die zwischen einer Gießstellung und einer Auswerfstellung unter Ausnutzung ihrer Eigenfederung bewegbar sind. Dabei bilden die Formsegmente in der Gießstellung einen umfangsförmig geschlossenen Ring, während sie in der Auswerfstellung radial nach innen versetzt angeordnet sind. Ein derart ausgebildetes Spritzgießwerkzeug ist geeignet, aufgrund der Bewegbarkeit der Formsegmente des inneren Formteils ein schnelles und einwandfreies Auswerfen eines spritzgegossenen Werkstücks zu ermöglichen, da die in der Auswerfstellung radial nach innen versetzt angeordneten Formsegmente die aufgrund einer Innenhinterschneidung hervorgerufene geometrische Verbindung zwischen spritzgegossenem Werkstück und innerem Formteil in betriebsgünstiger Weise aufheben. Dabei gewährleisten die Formsegmente nach Einnahme ihrer Gießstellung, in welcher sie einen umfangsförmig geschlossenen Ring bilden, eine fertigungstechnisch korrekte Ausformung des Werkstücks, da die Formsegmente in Gießstellung eine vollständige und spritzgießwerkzeuggerechte äußere Wirkfläche bereitstellen. Ferner wird mittels Ausnutzung der Materialeigenfederung der jeweiligen Formsegmente eine verhältnismäßig einfache, schnelle und zuverlässige Bewegung der Formsegmente zwischen der Gießstellung und der Auswerfstellung ermöglicht. Das innere Formteil ist vorteilhafterweise fertigungstechnisch verhältnismäßig einfach herstellbar und erlaubt einen handhabungsfreundlichen und betriebsgünstigen Einsatz des Spritzgießwerkzeugs.

Mit Vorteil besteht das innere Formteil aus zwei voneinander trennbaren Spaltkernelementen, welche jeweils eine Mehrzahl an einteilig mit diesen verbundenen Formsegmenten aufweisen, die sich in Gießstellung einander komplementär ergänzen unter Ausbildung einer kontinuierlichen Wirkfläche des inneren Formteils. Bei zwei voneinander separaten Spaltelementen, welche zusammen das innere Formteil bilden, ist es in besonders einfacher Weise möglich, die Spaltkernelemente fertigungstechnisch derart zu behandeln, wie zum Beispiel mittels einer Wärmebehandlung in Form von Härten, dass die zwei Spaltkernelemente voneinander unterschiedliche Materialeigenschaften insbesondere in Bezug auf die Eigenfederung der entsprechenden Formsegmente aufweisen. Somit sind die zwei Spaltkernelemente geometrisch derart ausgebildet, dass deren Formsegmente sich in der Gießstellung einander komplementär ergänzen unter Ausbildung einer kontinuierlichen, äußeren Wirkfläche. Da die Spaltkernelemente jeweils einteilig ausgebildet sind, ist das innere Formteil besonders montagefreundlich und fertigungstechnisch verhältnismäßig einfach herstellbar. Ferner kann bei einer zweiteiligen Ausführung ein eventuell defektes Spaltkernelement in kostengünstiger Weise ausgetauscht werden.

Vorteilhafterweise sind die Formsegmente umfangsförmig gleichmäßig angeordnet unter Ausbildung eines Aufnahmespalts zwischen zwei Formsegmenten. Da die zwei Spaltkernelemente mittels ihrer Formsegmente in Gießstellung zusammen die Wirkfläche des inneren Formteils bilden sollen, bietet es sich an, in fertigungstechnisch verhältnismäßig einfacher Weise die Formsegmente umfangsförmig gleichmäßig anzuordnen. Der zwischen jeweils zwei Formsegmenten eines Spaltkernelements ausgebildete Aufnahmespalt dient zur Aufnahme eines entsprechend, das heißt komplementär, ausgebildeten Formsegments des anderen Spaltkernelements, um in Gießstellung eine kontinuierliche, äußere Wirkfläche des inneren Formteils zu bilden.

Vorzugsweise sind die Aufnahmespalte eines ersten Spaltkernelements jeweils durch zwei ebene, radial nach außen zueinander konvergierende Formsegmentflanken und die Aufnahmespalte des zweiten Spaltkernelements jeweils durch zwei ebene, radial nach innen zueinander konvergierende Formsegmentflanken begrenzt. Ebene Formsegmentflanken sind fertigungstechnisch besonders einfach herstellbar, wobei der jeweilige Aufnahmespalt eines Spaltkernelements komplementär zu einem in diesem in Gießstellung aufzunehmenden Formsegment des anderen Spaltkernelements ausgebildet ist. Es erfolgt somit in Folge einer radialen Relativbewegung zwischen den wechselseitig ineinandergreifenden Formsegmenten der zwei Spaltkernelemente eine in Gießstellung zu realisierende Ausbildung einer kontinuierlichen, äußeren Wirkfläche des inneren Formteils. Die ebenen und radial nach innen beziehungsweise nach außen konvergierenden Formsegmentflanken begünstigen ein zuverlässiges und korrektes Ineinandergreifen der Formsegmente der zwei Spaltkernelemente zur vollständigen Ausbildung der Wirkfläche des inneren Formteils.

Mit Vorteil ist die Auswerfstellung der Formsegmente eine Ruheposition, welche die Formsegmente mittels ihrer Materialeigenfederung eigenständig einnehmen. Da die Ruheposition der Formsegmente der Auswerfstellung des inneren Formteils entspricht, sind die Formsegmente und somit das innere Formteil geeignet, eigenständig aufgrund ihrer Materialeigenfederung die Auswerfstellung einzunehmen. Dies ermöglicht eine zuverlässige und betriebsgünstige Verstellung beziehungsweise Bewegung des inneren Formteils beziehungsweise der Formsegmente aus der Gießstellung in die Auswerfstellung.

Vorteilhafterweise verjüngen sich die Spaltkernelemente in Ruheposition zu einer Einspritzseite hin im Wesentlichen kegelstumpfförmig. Hierdurch wird gewährleistet, dass aufgrund der Innenhinterschneidung die zwischen dem spritzgegossenen Werkstück und dem inneren Formteil vorliegende geometrische Verbindung mittels Verstellen der Spaltkernelemente in die Auswerfstellung (Ruheposition) unter Ausnutzung der Materialeigenfederung der Formsegmente aufgehoben wird. Dabei weisen die freien Enden der Formsegmente der Spaltkernelemente in Richtung einer Einspritzöffnung des Spritzgießwerkzeugs.

Mit Vorteil sind die Spaltkernelemente wärmebehandelt. Mitteils einer Wärmebehandlung der Spaltkernelemente ist es fertigungstechnisch in verhältnismäßig einfacher und zuverlässiger Weise möglich, insbesondere die Formsegmente entsprechend einer erwünschten Ruheposition (Auswerfstellung) bleibend vorzuverformen und somit die Spaltkernelemente mit einer definierten Materialeigenfederung zu versehen. Dabei kann es sich bei der Wärmebehandlung um ein Härten eines Werkzeugmaterials, wie zum Beispiel Federstahl, handeln.

Gemäß einer bevorzugten Ausführungsform weisen die Spaltkernelemente eine zentrale Aufnahmeöffnung auf zur Aufnahme eines die Formsegmente in eine Gießstellung bringenden Dorns. Da die als Ring ausgebildeten Spaltkernelemente in ihrer Ruheposition eine einspritzseitig sich im Wesentlichen kegelstumpfförmig verjüngende Betriebsposition (Auswerfstellung) einnehmen, in welcher deren Formsegmente radial nach innen versetzt angeordnet sind, eignet sich ein koaxial in eine zentrale Aufnahmeöffnung der Spaltkernelemente einführbarer Dorn, der vorzugsweise als Kegeldorn ausgebildet ist, besonders zur Realisierung einer zuverlässigen und schnellen elastischen Bewegung beziehungsweise Verschwenkung der Formsegmente aus ihrer jeweiligen Ruheposition (Auswerfstellung) in eine Gießstellung, in welcher die Formsegmente zur Ausbildung einer kontinuierlichen, äußeren Wirkfläche des inneren Formteils einen umfangsförmig geschlossenen Ring bilden. Mittels einer axialen Relativbewegung zwischen dem Dorn und den zwei Spaltkernelementen ist es somit in betriebsgünstiger Weise möglich, die Formsegmente zwischen einer Gießstellung und einer Auswerfstellung in kontrollierter Weise zu bewegen.

Zur Lösung der Aufgabe wird auch ein Verfahren zum Herstellen eines inneren Formteils eines Spritzgießwerkzeugs vorgeschlagen, das die Merkmale des Anspruchs 10 aufweist. Das erfindungsgemäße Verfahren ist gekennzeichnet durch folgende Verfahrensschritte:
- Herstellen von zwei gleich ausgebildeten Fertigungsteilen mit jeweils einer äußeren Wirkfläche;
- Segmentieren der zwei Drehteile unter Ausbildung von zwei jeweils eine Mehrzahl an Formsegmenten aufweisenden Spaltkernelementen, wobei sich die Formsegmente des einen Spaltkernelements komplementär mit den Formsegmenten des anderen Spaltkernelements zur Ausbildung der äußeren Wirkfläche ergänzen;
- Vorverformen der Formsegmente in eine jeweilige Betriebsstellung;
- Wärmebehandeln der Formsegmente unter Ausbildung einer bleibenden Eigenfederung, mittels welcher die Formsegmente selbständig die Betriebsstellung einnehmen.

Dieses Verfahren erlaubt, mittels zwei gleicher Drehteile (beispielsweise), die vorteilhafterweise gegebenenfalls als Normteile beziehungsweise Standardteile ausgebildet sein können, in fertigungstechnisch verhältnismäßig einfacher Weise ein inneres Formteil herzustellen. Ferner lassen sich die bereits in Bezug auf das Spritzgießwerkzeug vorerwähnten Vorteile erzielen.

Mit Vorteil ist die Betriebsstellung die Auswerfstellung des entsprechenden Spaltkernelements. Hierdurch wird ermöglicht, dass die Formsegmente aufgrund ihrer Materialeigenfederung selbständig ihre jeweils vorgesehene Auswerfstellung nach Beendigung des Spritzgießprozesses einnehmen und somit ein zuverlässiges und betriebsgünstiges Auswerfen des spritzgegossenen Werkstücks aus dem Spritzgießwerkzeug ermöglichen.

Vorzugsweise erfolgt die Wärmebehandlung mittels Härten. Härten ist ein geeignetes Wärmebehandlungsverfahren zum Vorverformen von beispielsweise aus einem Federstahl hergestellten Spaltkernelementen unter Ausbildung einer erwünschten Materialeigenfederung.

Weitere vorteilhafte Ausgestaltungen der Erfindung ergeben sich aus der Beschreibung.

Die Erfindung wird nachfolgend in einem Ausführungsbeispiel anhand einer zugehörigen Zeichnung näher erläutert. Es zeigen:
- Figur 1: einen schematischen Längsschnitt eines teilweise dargestellten Spritzgießwerkzeugs;
- Figur 2: einen schematischen Längsschnitt eines mittels des Spritzgießwerkzeugs gemäß Figur 1 spritzgegossenen Werkstücks in vergrößertem Maßstab;
- Figur 3: eine schematische Seitenansicht eines ersten Spaltkernelements des Spritzgießwerkzeugs gemäß Figur 1 in vergrößertem Maßstab;
- Figur 4: eine schematische Stirnansicht des ersten Spaltkernelements gemäß Figur 3;
- Figur 5: eine schematische Ansicht eines längsgeschnittenen zweiten Spaltkernelements des Spritzgießwerkzeugs gemäß Figur 1 in vergrößertem Maßstab;
- Figur 6: eine schematische Stirnansicht des zweiten Spaltkernelements gemäß Figur 5 und
- Figur 7: eine schematische Seitenansicht eines Dorns des Spritzgießwerkzeugs gemäß Figur 1 in vergrößertem Maßstab.

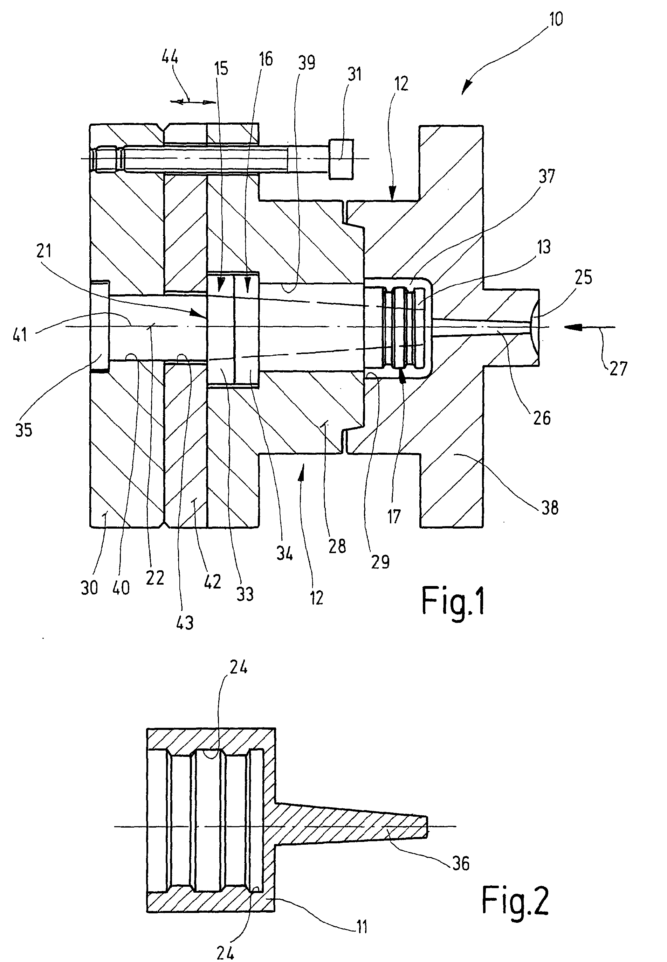

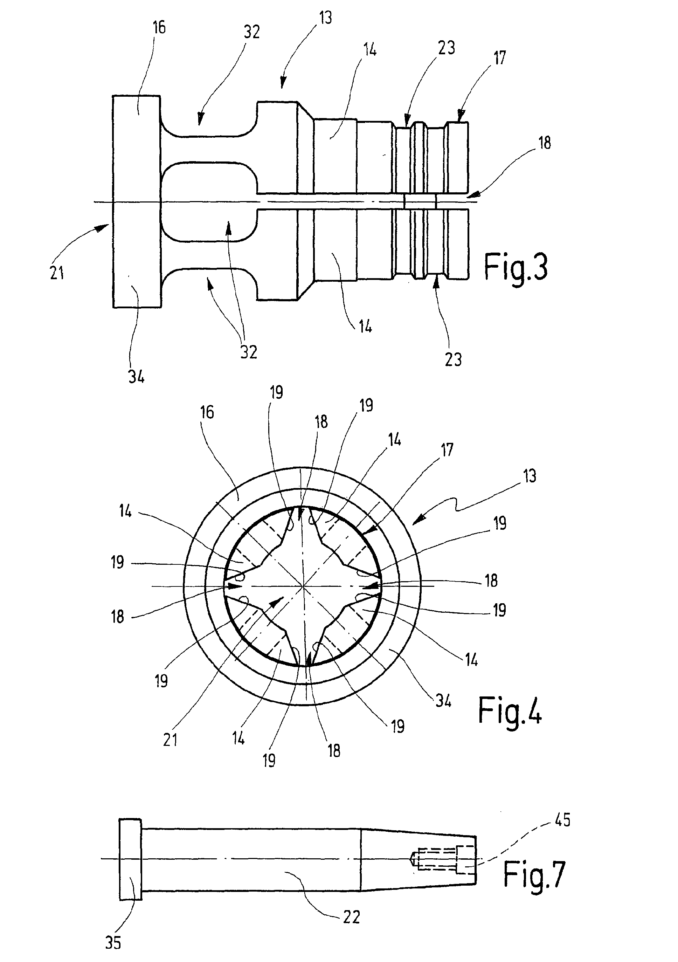

Figur 1 zeigt in schematischer Darstellung ein längsgeschnittenes Spritzgießwerkzeug 10, welches ein äußeres Formteil 12 und ein von diesem getrenntes inneres Formteil 13 aufweist. Das äußere Formteil 12 enthält einen Einspritzflansch 38 und einen zu diesem koaxial angeordneten und mit selbigem stirnseitig in Wirkverbindung stehenden Aufnahmeflansch 28. Der Einspritzflansch 38 weist eine Spritzgusskammer 37 auf, welche einspritzseitig mittels eines Einspritzkanals 26 mit einem von außen zugänglichen Sitz 25 verbunden ist. Der Sitz 25 dient als Zentrierung einer nicht dargestellten und an sich bekannten Einspritzdüse. Das innere Formteil 13 ist teilweise in einer Durchgangsöffnung 39 des Aufnahmeflansches 28 aufgenommen und ragt einspritzseitig mit seinem eine äußere Wirkfläche 17 aufweisenden freien Ende in die Spritzgusskammer 37 des Einspritzflansches 38. Das innere Formteil 13 besteht aus zwei voneinander trennbaren Spaltkernelementen 15, 16, welche jeweils eine Mehrzahl an einteilig mit diesen verbundenen Formsegmenten 14 aufweisen, die später anhand der Figuren 3 bis 6 eingehend beschrieben werden. Das innere Formteil 13 weist eine zentrale Aufnahmeöffnung 21 auf, in welcher ein Dorn 22 eingeführt ist. Der Dorn 22 ist in einer zentralen Durchgangsöffnung 40 von einem mit 30 bezeichneten Aufnahmeelement aufgenommen und erstreckt sich durch eine Durchgangsöffnung 43 einer Abdeckplatte 42, welche mittels eines oder mehrerer Befestigungsmittel (nicht dargestellt) stirnseitig und koaxial mit dem Aufnahmeflansch 28 und somit mit dem äußeren Formteil 12 wirkverbunden ist. Entsprechend Figur 1 ist die Durchgangsöffnung 40 des Aufnahmeelements 30, die Durchgangsöffnung 43 der Abdeckplatte 42, die Durchgangsöffnung 39 des Aufnahmeflansches 28, die Spritzgusskammer 37, der Einspritzkanal 26, der Sitz 25, das innere Formteil 13 und der Dorn 22 koaxial zu einer Längsachse 41 des Spritzgießwerkzeugs 10 angeordnet. Dabei ist das mit einer Gießmasse, wie zum Beispiel Kunststoff, auszufüllende Spritzgießvolumen des Spritzgießwerkzeugs 10 definiert durch die Spritzgusskammer 37, den Einspritzkanal 26, das innere Formteil 13 und durch eine Stirnfläche 29 des Aufnahmeflansches 28. Die Spaltkernelemente 15, 16 und der Dorn 22 weisen einen jeweiligen Positionierring 31, 34, 35 auf, der als geschlossenes, ungeteiltes Kopfteil ausgebildet und in einem entsprechenden Sitz der zugehörigen Durchgangsöffnung 39 beziehungsweise 40 positionsgenau aufgenommen ist. Die Abdeckplatte 42 und das äußere Formteil 12 sind geeignet, gemäß Doppelpfeil 44 in Längsrichtung bewegt zu werden, um eine in Bezug auf das ortsfeste Aufnahmeelement 30 beabstandete beziehungsweise anliegende Betriebsposition einzunehmen. In der beabstandeten Betriebsposition der Abdeckplatte 42, und des äußeren Formteils 12, nehmen die Formsegmente 14 ihre jeweilige Auswerfstellung ein. Die Bewegung in Längsrichtung der Abdeckplatte 42 wird durch wenigstens einen Begrenzungsbolzen 31 in Richtung beabstandete Betriebsstellung begrenzt.

Figur 2 zeigt in schematischer Darstellung einen Längsschnitt eines mittels des Spritzgießwerkzeugs 10 dargestellten Werkstücks 11 in vergrößertem Maßstab. Das Werkstück 11 ist beispielsweise aus Kunststoff hergestellt und weist, in Längsrichtung gesehen, Innenhinterschneidungen 24 auf. Die Innenhinterschneidungen 24 sind durch die entsprechend profilierte, äußere Wirkfläche 17 des inneren Formteils 13 erzeugt worden (siehe auch Figur 1). Das Werkstück 11 enthält ferner einen Zapfen 36, der durch das in Einspritzrichtung gemäß Pfeil 27 in den Einspritzkanal 26 eingespritzte und in diesem verbliebene Spritzgussmaterial (Kunststoff) gebildet worden ist und gegebenenfalls in einem an den Spritzgießprozess sich anschließenden Bearbeitungsschritt entfernt werden kann. Das Werkstück 11 gemäß Figur 2 ist beispielsweise eine noch fertig zu bearbeitende, innenprofilierte Kappe.

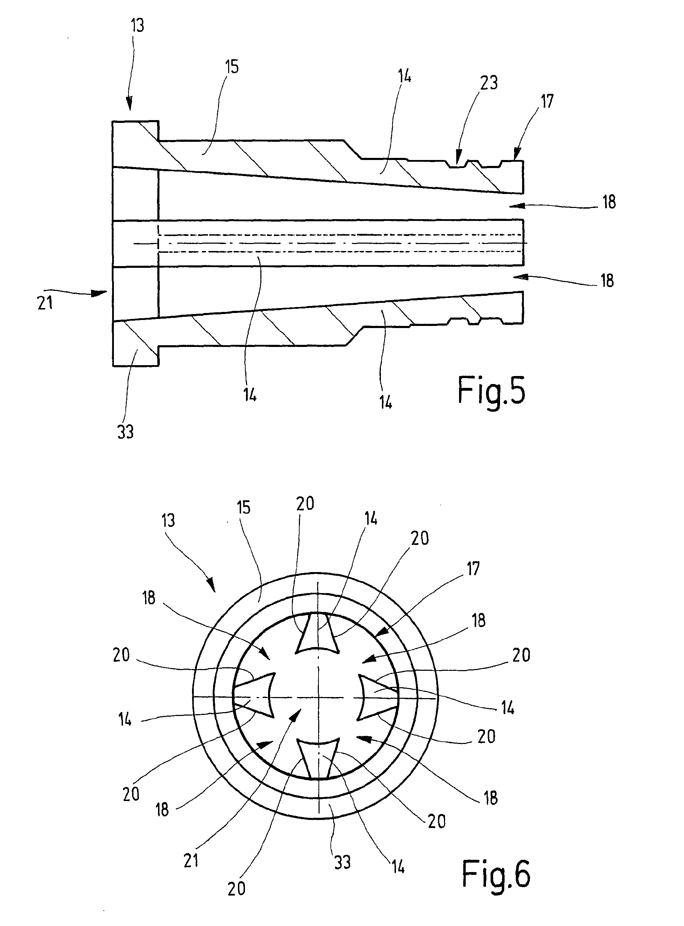

Die Figuren 3 und 4 zeigen in schematischer Darstellung ein Spaltkernelement 16 des inneren Formteils 13. Das Spaltkernelement 16 enthält eine Mehrzahl an Formsegmenten 14, im vorliegenden Fall vier Formsegmente 14. Die Formsegmente 14 sind einteilig mit dem Positionierring 34 des Spaltkernelements 16 ausgebildet. Die Formsegmente 14 weisen eine nicht vollständige, äußere Wirkfläche 17 auf, welche mittels als Umlaufnuten ausgebildete Hinterschneidungen 23 in Längsrichtung profiliert ist. Die Formsegmente 14 sind umfangsförmig gleichmäßig angeordnet, wobei zwischen jeweils zwei Formsegmenten 14 ein Aufnahmespalt 18 ausgebildet ist. Die Aufnahmespalte 18 sind jeweils durch zwei ebene, radial nach außen zueinander konvergierende und sich in Längsrichtung des Spaltkernelements 16 erstreckende Formsegmentflanken 19 begrenzt. Das als Ring ausgebildete Spaltkernelement 16 weist eine zentrale Aufnahmeöffnung 21 zur Aufnahme des Dorns 22 auf. Die Formsegmente 14 sind unter Ausnutzung ihrer Materialeigenfederung zwischen einer Gießstellung gemäß Figur 3 und einer Auswurfstellung (nicht dargestellt), in welcher sie radial nach innen gebogen angeordnet sind unter Ausbildung eines sich im Wesentlichen kegelstumpfförmig zur Einspritzseite hin verjüngenden Spaltkernelements 16, bewegbar. Hierzu ist das Spaltkernelement 16 unmittelbar im Anschluss an den Positionierring 34 mit Ausnehmungen 32 versehen, welche eine elastische Bewegung beziehungsweise Verschwenkung der jeweiligen Formsegmente 14 in radialer Richtung begünstigen. Das Spaltkernelement 16 ist vorzugsweise aus einem wärmebehandelten beziehungsweise gehärteten Federstahl hergestellt, wobei die Formsegmente 14 unter Ausnutzung ihrer Materialeigenfederung selbständig eine Ruheposition einnehmen, welche einer erwünschten Auswerfstellung des inneren Formteils 13 entspricht.

Die Figuren 5 und 6 zeigen in schematischer Darstellung das zweite Spaltkernelement 15 der Figur 1 in vergrößertem Maßstab. Das Spaltkernelement 15 ist ähnlich wie das Spaltkernelement 16 gemäß den Figuren 3 und 4 ausgebildet, wobei sich die Formsegmente 14 beider Spaltkernelemente 15, 16 in Gießstellung (siehe Figur 1) einander komplementär ergänzen können unter Ausbildung der kontinuierlichen, äußeren Wirkfläche 17 des inneren Formteils 13. Hierzu sind die Aufnahmespalte 18 des zweiten Spaltkernelements 15 jeweils durch zwei ebene, radial nach innen zueinander konvergierende und sich in Längsrichtung des Spaltkernelements 15 erstreckende Formsegmentflanken 20 begrenzt, während, wie oben erwähnt, beim ersten Spaltkernelement 16 gemäß den Figuren 3 und 4 die entsprechenden, gegenüberliegenden Formsegmentflanken 19 radial nach außen zueinander konvergieren.

Die gemäß Figur 1 wechselseitig ineinander eingreifenden Formsegmente 14 der zwei Spaltkernelemente 15, 16, welche das innere Formteil 13 bilden, sind zwischen einer Gießstellung (siehe Figur 1), in welcher sie einen umfangsförmig geschlossenen Ring bilden, und einer Auswerfstellung, in welcher sie radial nach innen versetzt angeordnet sind, unter Ausnutzung ihrer Materialeigenfederung bewegbar. Zur Realisierung der Gießstellung der Formsegmente 14 wird der Dorn 22, aufgrund einer Relativbewegung zwischen dem Aufnahmeelement 30 und der Abdeckplatte 42 mit dem äußeren Formteil 12 gemäß Doppelpfeil 44, in die zentrale Aufnahmeöffnung 21 des inneren Formteils 13 bis zu einer vorbestimmten Länge eingeschoben. Ein derartiger Dorn 22 ist beispielhaft in Figur 7 dargestellt. Er weist ein kegelstumpfförmiges und endseitig sich verjüngendes, freies Ende auf, mittels welchem eine Einführung in die ebenfalls im Wesentlichen kegelstumpfförmige und sich zur Einspritzseite hin verjüngende, zentrale Aufnahmeöffnung 21 begünstigt wird. Die Formsegmente 14 sind somit mittels eines derartig ausgebildeten Dorns 22 (Kegeldorn) in betriebsgünstiger und korrekter Weise aus ihrer Auswerfstellung in die Gießstellung bewegbar und bei Aufhebung der Wirkverbindung zwischen Dorn 22 und innerem Formteil 13 geeignet, unter Ausnutzung ihrer Materialeigenfederung selbständig wieder die Auswerfstellung einzunehmen. Dabei kann die Aufhebung der Wirkverbindung zwischen Dorn 22 und innerem Formteil 13 mittels Zurückziehen des Dorns 22 beziehungsweise mittels Verschieben des inneren Formteils 13 mit dem spritzgegossenen Werkstück 11 (Spritzling), nach einer zusätzlichen und gleichzeitigen Kühlung beispielsweise des Dorns 22, erfolgen. Während in der Gießstellung die Formsegmente 14 mittels des in die zentrale Aufnahmeöffnung 21 eingeführten Dorns 22 nach außen elastisch gespreizt sind unter Ausbildung der kontinuierlichen, äußeren Wirkfläche 17, welche der Innenkontur des spritzzugießenden Werkstücks 11 entspricht, weist das innere Formteil 13 in der Auswerfstellung ein kleineres Außenmaß auf, so dass die Innenhinterschneidungen 24 des spritzgegossenen Werkstücks 11 freigegeben werden und somit das Werkstück 11 betriebsgünstig und ohne Beschädigung aus dem Spritzgießwerkzeug 10 mit an sich bekannten Auswerfmitteln beziehungsweise Methoden entfernt werden kann.

Mittels eines inneren Formteils 13, bestehend aus zwei ineinander passenden und sich komplementär ergänzenden Spaltkernelementen 15, 16 ist es vorteilhafterweise möglich, ein verhältnismäßig kompaktes Spritzgießwerkzeug 10 zu realisieren, wobei zur Herstellung des inneren Formteils 13 beziehungsweise der Spaltkernelemente 15, 16 Standardwerkzeugmaschinen eingesetzt werden können und somit keine aufwendigen Sondermaschinen benötigt werden. Dabei kann der Dorn 22 (Kegeldorn) als Hilfsmittel zur endgültigen Formgebung bei der Herstellung des inneren Formteils 13 beziehungsweise der Spaltkernelemente 15, 16 zum Beispiel mittels Dreh-, Schleif-, Gewindeschneidverfahren und/oder mittels anderen Fertigungsverfahren dienen. Hierzu kann der Dorn 22 gemäß Figur 7 mit einem stirnseitigen Sackloch 45 versehen sein, um die Spaltkernelemente 15, 16 in Gießstellung auf dem Dorn 22 mit geeigneten Befestigungsmitteln befestigen zu können zur nachträglichen Einarbeitung einer Hinterschneidung 23 in die Spaltkernelemente 15, 16. Das innere Formteil 13 kann in verschiedenen Abmessungen und ohne eine Hinterschneidung serienmäßig hergestellt werden, wobei eine jeweils erwünschte Profilierung (Hinterschnitt) der äußeren Wirkfläche 17 nachträglich beim Endverbraucher, das heißt beim Endhersteller beziehungsweise Anwender des Spritzgießwerkzeugs 10, realisiert werden kann. Es ist somit möglich, das innere Formteil 13, bestehend aus zwei Spaltkernelementen 15, 16, als Normteil beziehungsweise als Standardteil anzubieten. Da im Falle eines Spritzgusswerkstücks mit Innengewinde zur Lagerung und Betätigung des inneren Formteils 13 keine drehenden Bauteile, wie zum Beispiel Kugellager oder Zahnräder, benötigt werden, kann das besonders kompakt ausbildbare Spritzgießwerkzeug 10 in entsprechend kleinen Spritzgießmaschinen eingesetzt werden, so dass auch die aufzuwendenden Maschinenkosten reduziert werden können. Der Dorn 22 (Kegeldorn) kann in betriebsgünstiger Weise gekühlt werden, so dass ferner die Produktivität dieses Spritzgießwerkzeugs 10 aufgrund einer schnelleren Abkühlung des spritzgegossenen Werkstücks 11 vorteilhafterweise groß ist.

Vorteilhafterweise ist das erfindungsgemäße Spritzgießwerkzeug nicht auf die Herstellung von im Querschnitt runde Spritzgießwerkstücke beschränkt, sondern kann auch zur Fertigung von Spritzgießwerkstücken mit anderen, beispielsweise reckteckigen Querschnitten eingesetzt werden.

Die zweiteilige Ausbildung des inneren Formteils 13 (trennbare Spaltkernelemente 15, 16) ermöglicht eine korrekte radiale Bewegung der Formsegmente 14, wobei gleichzeitig die Baulänge des inneren Formteils 13 und somit auch diejenige des Spritzgießwerkzeugs 10 möglichst klein gehalten werden kann. Dies ermöglicht vorteilhafterweise die Herstellung von verhältnismäßig kleinen Werkstücken mit im Verhältnis zu traditionellen Spritzgießwerkzeugen kleineren und somit preisgünstigeren Spritzgießwerkzeugen.

## Patentansprüche

1. Spritzgießwerkzeug, insbesondere zur Herstellung eines eine Innenhinterschneidung aufweisenden Kunststoff- oder Leichtmetallwerkstücks, mit einem äußeren Formteil und einem von diesem getrennten inneren Formteil, wobei das innere Formteil in Bezug auf das äußere Formteil bewegbar ist zum Auswerfen des spritzgegossenen Werkstücks, **dadurch gekennzeichnet, dass** das innere Formteil (13) eine Mehrzahl an Formsegmenten (14) enthält, die zwischen einer Gießstellung und einer Auswerfstellung unter Ausnutzung ihrer Eigenfederung bewegbar sind.

2. Spritzgießwerkzeug nach Anspruch 1, **dadurch gekennzeichnet, dass** das innere Formteil (13) aus zwei voneinander trennbaren Spaltkernelementen (15,16) besteht, welche jeweils eine Mehrzahl an einteilig mit diesen verbundenen Formsegmenten (14) aufweisen, die sich in Gießstellung einander komplementär ergänzen unter Ausbildung einer kontinuierlichen Wirkfläche (17) des inneren Formteils (13).

3. Spritzgießwerkzeug nach einem der vorhergehenden Ansprüche, **dadurch gekennzeichnet, dass** die Formsegmente (14) umfangsförmig gleichmäßig angeordnet sind unter Ausbildung eines Aufnahmespalts (18) zwischen jeweils zwei Formsegmenten (14).

4. Spritzgießwerkzeug nach einem der vorhergehenden Ansprüche, **dadurch gekennzeichnet, dass** die Aufnahmespalte (18) eines ersten Spaltkernelements (16) jeweils durch zwei ebene, radial nach außen zueinander konvergierende Formsegmentflanken (19) begrenzt sind.

5. Spritzgießwerkzeug nach einem der vorhergehenden Ansprüche, **dadurch gekennzeichnet, dass** die Aufnahmespalte (18) des zweiten Spaltkernelements (15) jeweils durch zwei ebene, radial nach innen zueinander konvergierende Formsegmentflanken (20) begrenzt sind.

6. Spritzgießwerkzeug nach einem der vorhergehenden Ansprüche, **dadurch gekennzeichnet, dass** die Auswerfstellung der Formsegmente (14) eine Ruheposition ist, welche die Formsegmente (14) mittels ihrer Materialeigenfederung eigenständig einnehmen.

7. Spritzgießwerkzeug nach einem der vorhergehenden Ansprüche, **dadurch gekennzeichnet, dass** sich die Spaltkernelemente (15,16) in Ruheposition zu einer Einspritzseite hin im Wesentlichen kegelstumpfförmig verjüngen.

8. Spritzgießwerkzeug nach einem der vorhergehenden Ansprüche, **dadurch gekennzeichnet, dass** die Spaltkernelemente (15,16) wärmebehandelt sind.

9. Spritzgießwerkzeug nach einem der vorhergehenden Ansprüche, **dadurch gekennzeichnet, dass** die Spaltkernelemente (15,16) eine zentrale Aufnahmeöffnung (21) aufweisen zur Aufnahme eines die Formsegmente (14) in eine Gießstellung bringenden Dorns (22).

10. Verfahren zum Herstellen eines inneren Formteils eines Spritzgießwerkzeugs insbesondere gemäß einem der vorhergehenden Ansprüche, **gekennzeichnet durch** folgende Verfahrensschritte:
- Herstellen von zwei gleich ausgebildeten Fertigungsteilen mit jeweils einer äußeren Wirkfläche (17);
- Segmentieren der zwei Drehteile unter Ausbildung von zwei jeweils eine Mehrzahl an Formsegmenten (14) aufweisenden Spaltkernelementen (15,16), wobei sich die Formsegmente (14) des einen Spaltkernelements (15;16) komplementär mit den Formsegmenten (14) des anderen Spaltkernelements (16;15) zur Ausbildung der äußeren Wirkfläche (17) ergänzen;
- Vorverformen der Formsegmente (14) in eine jeweilige Betriebsstellung;
- Wärmebehandeln der Formsegmente (14) unter Ausbildung einer bleibenden Eigenfederung, mittels welcher die Formsegmente (14) selbständig die Betriebsstellung einnehmen.

11. Verfahren nach einem der vorhergehenden Ansprüche, **dadurch gekennzeichnet, dass** die Betriebsstellung die Auswerfstellung des entsprechenden Spaltkernelements (15,16) ist.

12. Verfahren nach einem der vorhergehenden Ansprüche, **dadurch gekennzeichnet, dass** die Wärmbehandlung mittels Härten erfolgt.
